# EUROPÄISCHE PATENTSCHRIFT

(11) **EP 3 795 316 B1**
(45) Veröffentlichungstag und Bekanntmachung des Hinweises auf die Patenterteilung: **29.10.2025**
(21) Anmeldenummer: 19198341.0
(22) Anmeldetag: 19.09.2019
(51) Int. Cl.: B27G 13/02, B23C 5/10

(54) **WERKZEUGKOPF EINES BEARBEITUNGSWERKZEUGES**
TOOL HEAD OF A MACHINING TOOL
TÊTE D'OUTIL D'UN OUTIL D'USINAGE

(43) Veröffentlichungstag der Anmeldung: 24.03.2021
(73) Patentinhaber: Ledermann GmbH & Co. KG, 72160 Horb am Neckar (DE)
(72) Erfinder: GERMANN, Helmar, 9413 Oberegg (CH)
(74) Vertreter: Zurhorst, Stefan

(56) Entgegenhaltungen:
- EP-A1- 3 284 553
- WO-A1-2022/215114
- FR-A1- 2 858 947
- KR-A- 20140 005 678
- US-A- 5 173 013

## Beschreibung

Die Erfindung betrifft einen Werkzeugkopf eines Bearbeitungswerkzeuges gemäß dem Oberbegriff des Anspruchs 1. Ein solcher Werkzeugkopf wurde aus dem Dokument US 5 173013 A bekannt.

Bei der zerspanenden Bearbeitung von Werkstoffen, insbesondere von Holz oder holzartigen Werkstoffen (Spanplatten, MDF-Platten etc.), kommen drehend angetriebene Werkzeugköpfe zum Einsatz, die in verbreiteter Bauform einen Grundkörper sowie mehrere umfangsseitig des Grundkörpers angeordnete Wendeschneidplatten aufweisen. Die Wendeschneidplatten sind lösbar am Grundkörper befestigt und weisen jeweils mehrere Schneidkanten auf. Eine dieser Schneidkanten weist als aktive Schneidkante in Drehrichtung nach vorne und liegt auf der äußeren, umfangseitigen Mantelfläche des Werkzeugkopfes. Dabei ist die Wendeschneidplatte derart positioniert, dass die übrigen Schneidkanten gegenüber der Mantelfläche zurückversetzt liegen und deshalb passiv sind. Bei Verschleiß, Beschädigung oder dergleichen von einer aktiven Schneidkante kann die betreffende Wendeschneidplatte gelöst, gedreht bzw. gewendet und dann wieder befestigt werden, so dass eine frische, zuvor passive Schneidkante nun zur aktiven Schneidkante wird.

Zur Erzielung einer sauberen Werkstückoberfläche, zur Geräuschreduzierung und aus weiteren Gründen ist es im Regelfall nicht erwünscht, dass die aktive Schneidkante exakt parallel zur Achsrichtung des Werkzeugkopfes verläuft. Vielmehr werden die Wendeschneidplatten derart auf dem Grundkörper positioniert, dass die vorlaufenden aktiven Schneidkanten in einem bestimmten Achswinkel von ungleich 0° relativ zur Achsrichtung liegen. Hierdurch wird erreicht, dass die Schneidkante nicht schlagartig entlang ihrer gesamten Länge auf das Werkstück trifft, sondern dass der Eingriffspunkt zeitlich versetzt entlang der Schneidkante "wandert". Dies verhindert oder reduziert die Bildung von Rattermarken auf der Werkstückoberfläche und vermindert die Schallentwicklung beim Zerspanen. Ein zu berücksichtigender Nebeneffekt des Einsatzes von Schneidkanten mit Achswinkel ist der Umstand, dass die resultierenden Schnittkräfte immer eine axiale Richtungskomponente aufweisen, welche auf das Werkzeug und als Reaktionskräfte auch auf das Werkstück einwirken.

Ein verbreiteter Einsatzzweck der genannten Werkzeugköpfe ist das sogenannte Fügen, wobei die Stirnkante einer Platte über die gesamte Plattendicke in nur einem Arbeitsgang bearbeitet wird. An den beiden angrenzenden und sich gegenüberliegenden Werkstückoberflächen entstehen Kanten, die möglichst sauber ausgebildet sein sollen und keine Ausbrüche haben dürfen. Hier spielt die oben genannte axiale Kraftrichtungskomponente eine Rolle. Sie darf am Werkstück nicht nach außen gerichtet sein, da sie ansonsten zum Ausbrechen der Kanten beiträgt. Auf Höhe der beiden sich gegenüberliegenden Werkstückoberflächen werden also die Wendeschneidplatten mit zueinander gegenläufigen Achswinkeln und aufeinander zu weisend ausgerichtet. Die an beiden sich gegenüberliegenden Kanten auf das Werkstück einwirkenden Reaktionskräfte sind folglich nach innen zur Werkstückmitte und nicht nach außen gerichtet, so dass ein Ausfransen der Kanten unterbleibt. Ein derartiger Werkzeugkopf ist beispielsweise aus US 2016/0199997 A1 bekannt.

Ein weiterer verbreiteter Einsatzzweck der genannten Werkzeugköpfe ist das sogenannte Fälzen. Hierbei wirkt der Werkzeugkopf nicht entlang der gesamten Materialdicke auf das Werkstück ein. Vielmehr wird der Werkzeugkopf mit seiner umfangsseitigen Mantelfläche und mit zumindest einer Stirnseite in das Werkstück hinein gefahren, so dass ein Falz mit Außenkanten und mit zumindest einer Innenkante entsteht. Für diesen Zweck sind jedoch Werkzeugköpfe in der Bauart nach US 2016/0199997 A1 nicht geeignet. Die entsprechenden Wendeschneidplatten sind mit Achswinkeln von 45° oder 70° aufeinander zu gerichtet. Neben quadratischen und fünfeckigen Wendeschneidplatten kommen auch solche in Form eines gleichschenkligen Dreiecks zum Einsatz. In jedem Fall steht jedoch ein Teil der axial äußersten Schneidplatten in Richtung der zugehörigen Stirnseite über die aktiven Schneidkanten hervor. Infolgedessen ist die Ausarbeitung eines Falzes mit Innenecke nicht möglich.

Für die Aufgabe des Fälzens kommen deshalb Werkzeugköpfe zum Einsatz, bei denen die Wendeschneidplatten an der Werkzeugkopf-Stirnseite derart positioniert sind, dass ihre aktiven Schneidkanten nach außen weisen. Ein solcher Werkzeugkopf ist beispielsweise aus EP 3 031 560 A1 bekannt. Die nach außen weisende Schneidkantenorientierung erlaubt es, eine zugehörige Schneidenecke unmittelbar auf der Stirnseite des Werkzeugkopfes zu positionieren, um damit die Innenecken eines Falzes zu erzeugen. Gleichwohl beschränkt sich der Einsatzzweck auf das Fälzen. Ein Fügen ist damit nicht möglich, da die nach außen gerichteten Schneidkanten zum Ausbrechen der Werkstückkanten führen. Auch beim Fälzen ist die Ausrichtung der endseitigen Schneidkanten nach außen nicht ganz unproblematisch: Die nach außen wirkenden Reaktionskräfte drücken Späne und auch das Holzmaterial nach außen, was zu unerwünschten Materialverdichtungen und sogar zu Rissen oder dergleichen führen kann. Die US 5,173,013 A beschreibt ein Werkzeug, bei dem die unterste Schneidplatte und die oberste Schneidplatte dreieckig ausgeführt und außerdem derart ausgerichtet sind, dass sie aufeinander zu gerichtete Schneidkanten aufweisen. Vergleichbares gilt auch für die KR 2014 0005678 A, bei der die Schneidplatten nicht auf der Umfangsfläche, sondern auf radial orientierten Montageflächen mit im Wesentlichen radialer Ausrichtung montiert sind.

Jedenfalls ist es nach dem Stand der Technik erforderlich, für das Fügen und für das Fälzen verschiedene Werkzeugköpfe mit unterschiedlich orientierten Schneidkanten einzusetzen. Beim Wechsel zwischen den genannten Bearbeitungsaufgaben ist ein Umrüsten der Maschine erforderlich. Außerdem kann der Investitionsaufwand für zwei unterschiedliche Werkzeugköpfe nicht vermieden werden.

Der Erfindung liegt die Aufgabe zugrunde, einen gattungsgemäßen Werkzeugkopf derart weiterzubilden, dass dessen Einsatzbereich bei gleichzeitiger Erzielung bester Bearbeitungsergebnisse vergrößert ist.

Diese Aufgabe wird durch einen Werkzeugkopf mit den Merkmalen des Anspruchs 1 gelöst.

Nach der Erfindung ist zunächst vorgesehen, dass die ersten und zweiten Wendeschneidplatten in der Drehrichtung nach vorne weisende, vorlaufende aktive Schneidkanten aufweisen, welche mit zueinander gegenläufigen Achswinkeln relativ zur Achsrichtung ausgerichtet sind. Mindestens eine erste Wendeschneidplatte ist derart positioniert, dass sie eine vorlaufende Schneidenecke aufweist, an welcher die vorlaufende Schneidkante sowie eine weitere, bezogen auf die Drehrichtung nach hinten gerichtete passive Schneidkante in einem Eckwinkel aneinander angrenzen. Die mindestens eine erste Wendeschneidplatte ist derart montiert, dass eine erste Normalrichtung zur vorlaufenden Schneidkante von der ersten Stirnseite zur gegenüberliegenden zweiten Stirnseite weist. Die vorlaufende Schneidenecke schließlich liegt auf Höhe der ersten Stirnseite, wobei der Betrag des Eckwinkels kleiner ist als 90° minus dem Betrag des ersten Achswinkels.

Auf den ersten Blick liegt eine Konfiguration vor, wie man sie für das Fügen kennt, und wofür sie auch tatsächlich geeignet ist: Die ersten und zweiten vorlaufenden, aktiven Schneidkanten haben gegenläufige Achswinkel und sind außerdem einander zugewandt. Beim Fügen erfahren die beiden in der Dickenrichtung sich gegenüberliegenden Werkstückkanten nach innen gerichtete Reaktionskräfte, so dass keine Gefahr des Kantenausbruchs besteht. Darüber hinaus bewirkt aber die gegenseitige Anpassung von Achswinkel und Eckwinkel der vorlaufenden Schneidenecke gemäß der Erfindung, dass die angrenzende weitere Schneidkante bezogen auf die Drehrichtung nach hinten gerichtet ist und dabei vollständig auf der Rückseite der Schneidplatte liegt. Damit liegt die vorlaufende Schneidenecke in Achsrichtung ganz außen auf der Stirnseite. Der Werkzeugkopf kann folglich mit seiner Stirnseite in das Werkstück eintauchen und auf diese Weise einen Falz mit der Innenkante herstellen. Der gleiche Werkzeugkopf ist also sowohl für das Fügen als auch für das Fälzen geeignet, was die Investitionskosten senkt. Der Umrüstaufwand entfällt. Beim Fügen wird zumindest die gleiche Fertigungsqualität wie bisher erzielt. Beim Fälzen erfährt das Werkstück im Bereich der Falz-Innenkante axiale Reaktionskräfte, die von der Innenkante fort weisen und deshalb das Werkstück frei von Kompressions- und Aufspreizkräften hält, was zur Verbesserung des Bearbeitungsergebnisses beiträgt.

Es kann ausreichen, den Werkzeugkopf im Bereich seiner Stirnseite mit nur einer ersten Wendeschneidplatte zu versehen. Bevorzugt sind über den Umfang des Werkzeugkopfes verteilt mehrere und insbesondere insgesamt zwei erste Wendeschneidplatten angeordnet. Hierdurch ist eine Neigung zur Schwingungsbildung verringert.

Im Rahmen der Erfindung ist es möglich, in unmittelbarer Nähe zur Stirnseite sowie zusätzlich dazu auch mit axialem Abstand dazu erste Schneidplatten anzuordnen. In zweckmäßiger Weiterbildung sind jedoch abseits der ersten Stirnseite in der Achsrichtung verteilt mehrere und bevorzugt ausschließlich zweite Wendeschneidplatten auf der Mantelfläche positioniert, deren Achswinkel gegenläufig zum Achswinkel der mindestens einen ersten Wendeschneidplatte ist. Hierdurch entfällt die Notwendigkeit, das Werkzeug beim Fügen an die Dicke des Werkstückes anzupassen. Außerdem ist beim Fälzen auch keine Werkzeuganpassung an die axiale Eintauchtiefe erforderlich. Der Werkzeugkopf wird in axialer Richtung derart positioniert, dass die an der ersten Stirnseite positionierten ersten Wendeschneidplatten beim Fügen auf die untere Werkstückkante bzw. beim Fälzen auf der Bereich der Falz-Innenkante treffen. Alle anderen Wendeschneidplatten sind zweite Wendeschneidplatten mit entgegengesetzten Achswinkeln. Auf deren axiale Ausrichtung kommt es nicht mehr an. In jedem Fall wird der übrige Werkstückbereich auf eine Weise zerspant, dass die auftretenden Reaktionskräfte in der richtigen Axialrichtung wirken.

In einer vorteilhaften Weiterbildung der Erfindung ist der Werkzeugkopf an seiner zweiten Stirnseite analog zur ersten Stirnseite aufgebaut: Mindestens eine zweite Wendeschneidplatte weist eine vorlaufende Schneidenecke auf, an welcher die vorlaufende aktive Schneidkante sowie eine weitere, bezogen auf die Drehrichtung nach hinten gerichtete passive Schneidkante in einem Eckwinkel aneinander angrenzen. Diese zweite Wendeschneidplatte ist derart montiert, dass eine zweite Normalrichtung zur vorlaufenden Schneidkante von der zweiten Stirnseite zur gegenüberliegenden ersten Stirnseite weist. Die vorlaufende Schneidenecke liegt auf Höhe der zweiten Stirnseite, wobei der Betrag des Eckwinkels kleiner ist als 90° minus dem Betrag des zweiten Achswinkels. Damit herrschen auf beiden Stirnseiten spiegelsymmetrisch die gleichen Verhältnisse: Die am Werkstück entstehenden axialen Kraftkomponenten sind im Bereich beider Stirnseiten von der jeweiligen Stirnseite zur jeweils gegenüberliegenden Stirnseite gerichtet. Damit können nach Wahl beide Stirnseiten des Werkzeugkopfes alternativ oder gemeinsam für die Herstellung einer Falz-Innenkante genutzt werden.

Wenngleich im Rahmen der Erfindung breite Bereiche für die Einstellung der Achswinkel zur Verfügung stehen, hat sich als zweckmäßig herausgestellt, dass der Achswinkel der vorlaufenden Schneidkante einen Betrag aufweist, der in einem Bereich von einschließlich 3° bis einschließlich 28° und insbesondere in einem Bereich von einschließlich 5° bis einschließlich 15° liegt. Für den Betrag des Eckwinkels gilt als nicht zwingend, wohl aber bevorzugt, dass er kleiner als 80° minus dem Betrag des zugeordneten ersten bzw. zweiten Achswinkels ist. Jedenfalls ist auf diese Weise sichergestellt, dass einerseits ausreichend große Achswinkelbeträge eingestellt werden können, während andererseits die zurückliegenden Schneidkanten ausreichend Freiraum zum Werkstück haben.

All dies kann beispielsweise durch eine Rautenform der Schneidplatten erreicht werden. Vorteilhaft weist jedoch die jeweilige Wendeschneidplatte den Grundriss eines gleichschenkligen bzw. gleichwinkligen Dreiecks auf, wobei dann der genannte Eckwinkel etwa 60° beträgt. Die Bezeichnung "etwa" 60° berücksichtigt einen Eckwinkel von praktisch 60°, welcher jedoch tatsächlich geringfügig größer kein kann: Die Schneidkanten sind nämlich bevorzugt mit einer an die Mantelfläche des Werkzeugkopfes angepassten Bombierung versehen. Dadurch ist sichergestellt, dass die Schneidkanten entlang ihrer gesamten Länge auf der Mantelfläche verlaufen und somit ein einheitliches Zerspanungsbild mit glatter Werkstückoberfläche herbeiführen.

Ein Ausführungsbeispiel der Erfindung ist nachfolgend anhand der Zeichnung näher beschrieben. Es zeigen:
- Fig. 1: in einer Seitenansicht ein Bearbeitungswerkzeug mit einem erfindungsgemäß ausgeführten Werkzeugkopf, wobei auf dessen Mantelfläche angrenzend an beide Stirnseiten dreieckige Wendeschneidplatten mit aufeinander zuweisenden Schneidkanten angeordnet sind, und wobei jeweilige vorlaufende Schneidenecken ganz außen an den Stirnseiten liegen,
- Fig. 2: das Bearbeitungswerkzeug nach Fig. 1 in einer leicht gedrehten Position zur ergänzenden Darstellung der Winkelverhältnisse,
- Fig. 3: in einer Draufsicht eine Wendeschneidplatte des Werkzeugkopfes nach den Fig. 1 und 2,
- Fig. 4: in einer Stirnansicht das Bearbeitungswerkzeug nach den Fig. 1 und 2 mit optional auf der Stirnseite angebrachten Wendeschneidplatten,
- Fig. 5: in einer Seitenansicht das Bearbeitungswerkzeug nach den Fig. 1 bis 4 beim Vorgang des Fügens,
- Fig. 6: das gleiche Bearbeitungswerkzeug beim Fälzen,
- Fig. 7: das gleiche Bearbeitungswerkzeug beim umfangseitigen Herstellen einer Nut, und
- Fig. 8: wiederum das gleiche Bearbeitungswerkzeug beim stirnseitigen Herstellen einer Nut.

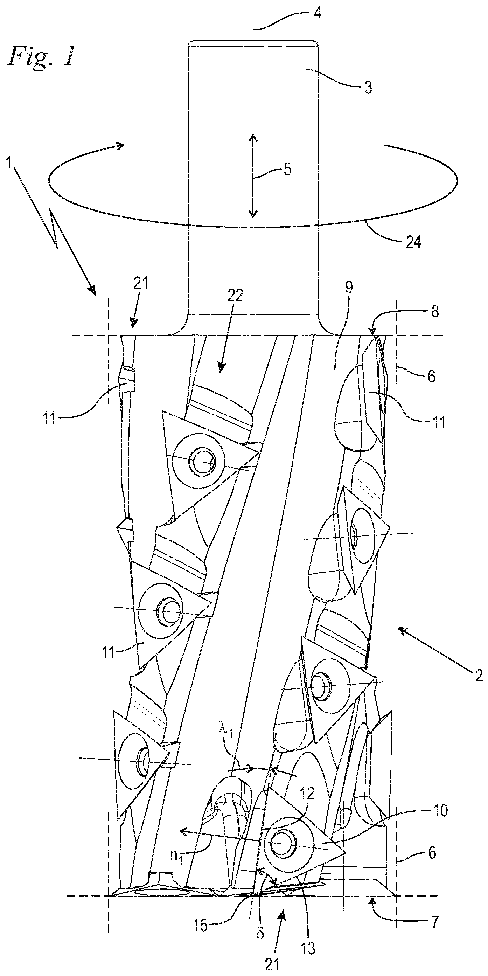

Fig. 1 zeigt in einer Seitenansicht ein Bearbeitungswerkzeug 1 mit einem erfindungsgemäß ausgeführten Werkzeugkopf 2. Das Bearbeitungswerkzeug 1 bzw. sein Werkzeugkopf 2 dienen der zerspanenden Bearbeitung von Werkstoffen, namentlich von Holz oder holzartigen Werkstoffen wie Spanplatten, MDF-Platten oder dergleichen. Der Werkzeugkopf 2 kann als Scheibe mit Durchgangsbohrung zum Aufspannen auf eine Werkzeugwelle ausgeführt sein. Im gezeigten Ausführungsbeispiel weist der Werkzeugkopf 2 einen Grundkörper 9 auf, welcher einteilig mit einem Schaft 3 ausgebildet ist. Der Schaft 3 seinerseits ist zum Einspannen mittels eines Spannfutters vorgesehen. Im Betrieb wird das Bearbeitungswerkzeug 1 einschließlich seines Werkzeugkopfes 2 um eine Drehachse 4 in einer Drehrichtung 24 drehend angetrieben. Achsparallel zur Drehachse 4 verläuft eine Achsrichtung 5, entlang derer sich das Bearbeitungswerkzeug 1 erstreckt.

Die Außenkontur des Werkzeugkopfes 2 ist durch eine umfangseitige Mantelfläche 6, eine erste Stirnseite 7 und eine in der Achsrichtung 5 gegenüberliegende zweite Stirnseite 8 vorgegeben. Die Mantelfläche 6 ist im gezeigten Ausführungsbeispiel zylindrisch. Es kann aber auch jede andere Form eines Rotationskörpers, beispielsweise eine konische Form oder eine konvex bzw. konkav gekrümmte Form für die Mantelfläche 6 zweckmäßig sein. Erfindungsgemäß umfasst der Werkzeugkopf 2 mehrere Wendeschneidplatten 10, 11, welche umfangsseitig des Grundkörpers 9 angeordnet sind, und deren in der Drehrichtung 24 nach vorne weisenden, also vorlaufenden aktiven Schneidkanten 12 auf der Mantelfläche 6 liegen bzw. die Mantelfläche 6 vorgeben und definieren.

Nachfolgend wird zwischen ersten Wendeschneidplatten 10 und zweiten Wendeschneidplatten 11 unterschieden, die zwar im gezeigten Ausführungsbeispiel geometrisch gleich ausgeführt sind, jedoch unterschiedlich orientiert auf dem Grundkörper 9 ausgerichtet sind. Auf Einzelheiten hierzu wird weiter unten näher eingegangen. Jedenfalls ist in Fig. 1 erkennbar, dass mindestens eine erste Wendeschneidplatte 10 auf der Mantelfläche 6 und angrenzend an die erste Stirnseite 7 positioniert ist. Diese erste Wendeschneidplatte 10 ist derart auf dem Grundkörper 9 positioniert, dass ihre vorlaufende Schneidkante 12 in einem ersten Achswinkel λ₁ relativ zur Achsrichtung 5 liegt. Eine erste Normalrichtung n₁ zur genannten vorlaufenden Schneidkante 12 liegt senkrecht zur Schneidkante 12 sowie tangential zur Mantelfläche 6. Dabei weist die erste Normalrichtung n₁ eine Richtungskomponente in der Drehrichtung 24 sowie eine Richtungskomponente in der Achsrichtung 5 auf. Der Achswinkel λ₁ ist derart gewählt, dass die axiale Richtungskomponente der ersten Normalrichtung n₁ von der ersten Stirnseite 7 zur gegenüberliegenden zweiten Stirnseite 8 weist.

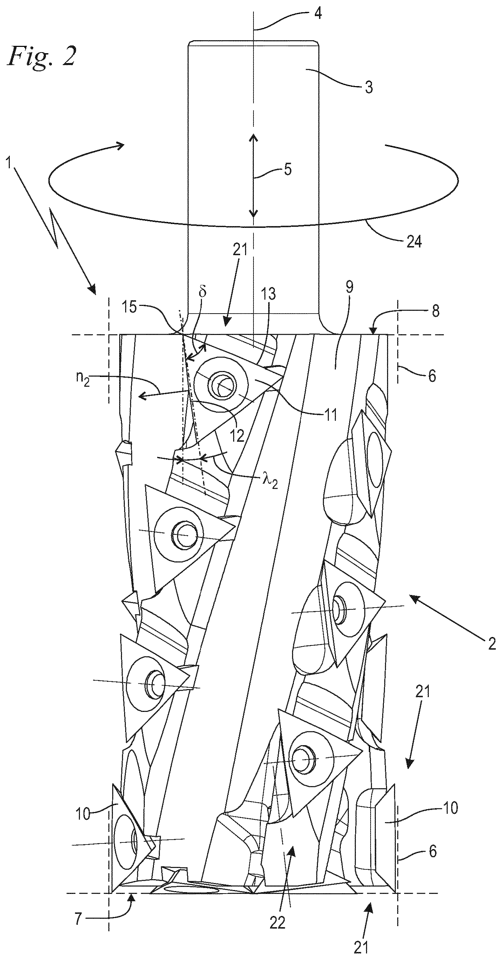

Fig. 2 zeigt das Bearbeitungswerkzeug nach Fig. 1 in einer relativ dazu um die Drehachse 4 leicht gedrehten Position. Hier ist erkennbar, dass die zweiten Wendeschneidplatten 11 mit ihren vorlaufenden, aktiven Schneidkanten 12 ebenfalls gegenüber der Achsrichtung 5 geneigt positioniert sind, und zwar in einem zweiten Achswinkel λ₂. Dabei ist der zweite Achswinkel λ₂ gegenläufig zum ersten Achswinkel λ₁. Eine zweite Normalrichtung n₂ zur genannten vorlaufenden Schneidkante 12 der zweiten Wendeschneidplatten 11 liegt senkrecht zur Schneidkante 12 sowie tangential zur Mantelfläche 6. Dabei weist auch die zweite Normalrichtung n₂ ebenso wie die erste Normalrichtung n₁ eine Richtungskomponente in der Drehrichtung 24 sowie eine Richtungskomponente in der Achsrichtung 5 auf. Der Achswinkel λ₂ ist hier jedoch mit seiner genannten Gegenläufigkeit derart gewählt, dass die axiale Richtungskomponente der zweiten Normalrichtung n₂ von der zweiten Stirnseite 8 zur gegenüberliegenden ersten Stirnseite 7 weist. Aus der Zusammenschau der Fig. 1 und 2 ergibt sich also, dass die ersten und zweiten Normalrichtungen n₁, n₂ aufeinander zu gerichtet sind, dass also die zugehörigen vorlaufenden Schneidkanten 12 der ersten und zweiten Wendeschneidplatten 10, 11 einander zugewandt sind.

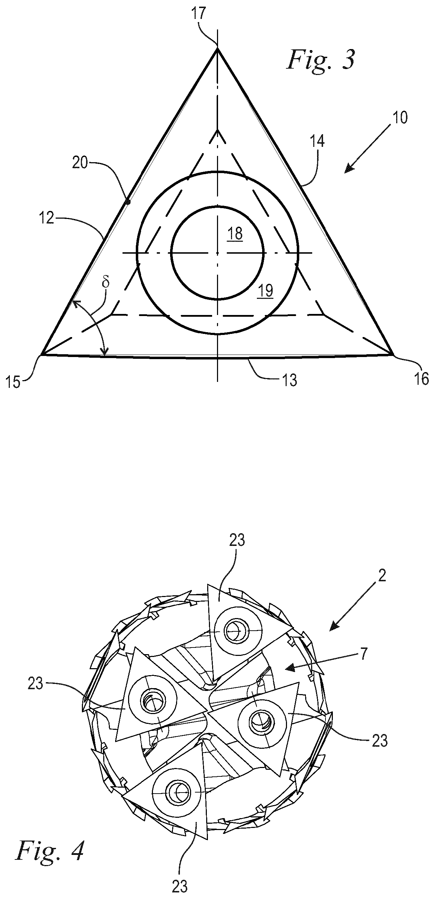

Fig. 3 zeigt in einer Draufsicht eine erste Wendeschneidplatte 10 des Werkzeugkopfes nach den Fig. 1 und 2. Das nachfolgend in diesem Zusammenhang Gesagte gilt gleichermaßen auch für die zweiten Wendeschneidplatten 11, welche für sich genommen identisch mit der hier gezeigten ersten Wendeschneidplatte 10 ausgeführt sind. Die ebene Wendeschneidplatte 10 ist mit einem mittigen Schraubloch 18 und mit einer umlaufenden Senkung 19 versehen. Mittels einer nicht dargestellten, hier hindurchgeführten Schraube wird die Wendeschneidplatte 10 auf den Grundkörper 9 des Werkzeugkopfes 2 (Fig. 1, 2) lösbar aufgeschraubt. Die Wendeschneidplatte 10 weist mehrere, hier drei Schneidkanten 12, 13, 14 auf. Nach Lösen der Verschraubung, Drehung der Schneidplatte um ihre Hochachse sowie erneutem Festziehen der Verschraubung übernimmt eine der weiteren Schneidkanten 13, 14 die Funktion der neuen, in der Drehrichtung 24 vorlaufenden Schneidkante 12 (Fig. 1, 2).

Der Grundriss der Wendeschneidplatte hat die Form eines gleichwinkligen Dreiecks und wird durch die drei nahezu geradlinigen Schneidkanten 12, 13, 14 gebildet, welche an Schneidenecken 15, 16, 17 aufeinandertreffen, und welche dabei jeweils einen Eckwinkel δ einschließen. Aufgrund des gleichwinkligen, gleichschenkligen Grundrisses betragen die Eckwinkel δ in erster Näherung 60°. Tatsächlich sind die Eckwinkel δ jedoch geringfügig größer, da die Schneidkanten 12, 13, 14 nicht exakt geradlinig verlaufen, sondern vielmehr jeweils eine konvexe Bombierung 20 aufweisen. Die Bombierung 20, also die Abweichung von der Geradlinigkeit ist derart an die Mantelfläche 6 des Werkzeugkopfes 2 (Fig. 1, 2) angepasst, dass die jeweils vorlaufende Schneidkante 12 entlang ihrer gesamten Länge auf der Mantelfläche 6 liegt.

Unter erneutem und gleichzeitigen Bezug auf die Fig. 1, 2 werden nun erfindungsgemäße Winkelbeziehungen deutlich. Die mindestens eine erste Wendeschneidplatte 10, welche auf der Mantelfläche 6 angrenzend an die erste Stirnseite 7 positioniert ist (Fig. 1), weist eine vorlaufende Schneidenecke 15 auf, an welcher die vorlaufende Schneidkante 12 sowie eine weitere Schneidkante 13 aneinander angrenzen und dabei den genannten Eckwinkel δ mit einem Betrag von 60° einschließen. Gleichzeitig weist der zugehörige Achswinkel einen Wert von etwa 7,5° auf. Daraus folgt, dass 90° minus dem Betrag des ersten Achswinkels λ₁ in Höhe von 7,5° einen Wert von 82,5° ergibt. Gemäß der erfindungsgemäßen Winkeldefinition ist der Eckwinkel δ mit einem Betrag von 60° kleiner als diese 82,5°. Dies hat zur Folge, dass die weitere, passive Schneidkante 13 zur ersten Stirnseite 7 hin und außerdem entgegen der Drehrichtung 24 gerichtet ist. Sie verläuft damit ausgehend von der vorlaufenden Schneidenecke 15 hinter der vorlaufenden Schneidkante 12, ohne den Zerspanungsvorgang zu stören. Die vorlaufende Schneidkante 12 hingegen verläuft in axialer Richtung bis unmittelbar zur ersten Stirnseite 7 bzw. bis zu deren Ebene, wo sie an der vorlaufenden Schneidenecke 15 endet, so dass der Werkzeugkopf 2 entlang seiner Mantelfläche 6 bis unmittelbar zur ersten Stirnseite 7 für die Zerspanung genutzt werden kann.

Die obigen Angaben zum ersten Achswinkel λ₁ und zum Eckwinkel δ sind beispielhafter Natur. Der erste Achswinkel λ₁ kann abweichen und weist dabei vorteilhaft einen Betrag auf, der in einem Bereich von einschließlich 3° bis einschließlich 28° und insbesondere in einem Bereich von einschließlich 5° bis einschließlich 15° liegt. Jedenfalls können der erste Achswinkel λ₁ und der zugehörige Eckwinkel δ im Rahmen der Erfindung beliebig variiert werden, solange die Beziehung erfüllt ist, dass der Betrag des Eckwinkels δ kleiner als 90° minus dem Betrag des ersten Achswinkels λ₁ ist, und bevorzugt kleiner als 80° minus dem Betrag des ersten Achswinkels λ₁ ist. Dann jedenfalls ist ein wesentliches erfindungsgemäßes Ziel erreicht, nämlich dass die vorlaufende Schneidkante 12 in axialer Richtung bis unmittelbar zur ersten Stirnseite 7 genutzt werden kann, obwohl die zugehörige erste Normalrichtung n₁ von der ersten Stirnseite 7 zur gegenüberliegenden zweiten Stirnseite 8 hin gerichtet ist.

Weiter oben wurde schon erwähnt, dass die übrigen, zweiten Wendeschneidplatten 11 mit ihren vorlaufenden Schneidkanten 12 in einem zum ersten Achswinkel λ₁ entgegengesetzten zweiten Achswinkel λ₂ liegen. Der zweite Achswinkel λ₂ weist folglich ein entgegengesetztes Vorzeichen mit einem Wert von etwa -7,5° auf. Trotz unterschiedlichem Vorzeichen ist der Betrag des zweiten Achswinkels λ₂ in Höhe von 7,5° gleich dem Betrag des ersten Achswinkels λ₁. Es kann aber auch ein abweichender Betrag zweckmäßig sein. Außerdem ist es im Rahmen der Erfindung möglich, dass nicht alle zweite Wendeschneidplatten 11 im untereinander gleichen zweiten Achswinkel λ₂ angeordnet sind.

Eine optionale Besonderheit des Bearbeitungswerkzeuges nach den Fig. 1, 2 besteht noch in der Ausgestaltung des Bereiches der oberen, zweiten Stirnseite 8 nahe dem Schaft 3: Hier ist mindestens eine zweite Wendeschneidplatte 11 derart positioniert, dass sie analog zur axial gegenüberliegenden ersten Wendeschneidplatte 10 eine vorlaufende Schneidenecke 15 aufweist, an welcher die vorlaufende Schneidkante 12 sowie die weitere Schneidkante 13 unter Einschluss des Eckwinkels δ aneinander angrenzen. Die Ausrichtung der zweiten Normalrichtung n₂ wurde oben schon beschrieben. Hier kommt jedoch hinzu, dass die vorlaufende Schneidenecke 15 auf Höhe der zweiten Stirnseite 8 liegt, und dass auch hier der Betrag des Eckwinkels δ mit 60° kleiner ist als 90° minus dem Betrag des zweiten Achswinkels λ₂ in Höhe von 7,5° = 82,5°. Für die Grenzen des zweiten Achswinkels λ₂ und dessen Abstimmung mit dem zugehörigen Eckwinkel δ gelten hier, also für die optionale Besonderheit der zweiten Wendeschneidplatte 11 unmittelbar angrenzend an die zweite Stirnseite 8 die gleichen Zahlenwerte wie die oben genannten Zahlenwerte für den ersten Achswinkel λ₁ in Verbindung mit dem Eckwinkel δ. Jedenfalls ist es damit auch hier möglich, den Werkzeugkopf 3 in axialer Richtung vollständig bis hin zur zweiten Stirnseite 8 zu nutzen, obwohl die zugehörige zweite Normalrichtung n₂ von der zweiten Stirnseite 8 zur gegenüberliegenden ersten Stirnseite 7 hin gerichtet ist.

Zuvor wurde erwähnt, dass im Bereich der ersten Stirnseite 7 mindestens eine erste Wendeschneidplatte 10 und im Bereich der zweiten Stirnseite 8 optional mindestens eine zweite Wendeschneidplatte 11 angeordnet ist. Tatsächlich kann es ausreichen, an diesen Stellen nur jeweils ein einziges Exemplar davon zu positionieren. Die Zusammenschau der Fig. 1 und 2 lässt aber erkennen, dass in der gezeigten bevorzugten Ausführungsform an den genannten Stellen über den Umfang des Werkzeugkopfes 2 verteilt mehrere und insbesondere insgesamt zwei erste Wendeschneidplatten 10 sowie zwei zweite Wendeschneidplatten 11 vorgesehen sind.

Hierzu gibt es im gezeigten Ausführungsbeispiel zwei erste Axialreihen 21 mit ersten und zweiten Wendeschneidplatten 10, 11, welche in der Achsrichtung 5 und unter Einhaltung eines leichten Spiralwinkels von der ersten Stirnseite 7 zur zweiten Stirnseite 8 verlaufen, und die in Umfangsrichtung um 180° zueinander versetzt sind. Am unteren Ende, also an der Stirnseite 7 weist jede erste Axialreihe 21 je eine erste Wendeschneidplatte 10 gemäß obiger Winkeldefinition auf, deren vorlaufende Schneidenecken 15 in Höhe der ersten Stirnseite 7 liegen. Die übrigen Schneidplatten sind zweite Wendeschneidplatten 11 gemäß obiger Winkeldefinition, wobei je eine axial äußerste zweite Wendeschneidplatte 11 mit ihrer vorlaufenden Schneidenecke 15 in Höhe der zweiten Stirnseite 8 liegt. In Umfangsrichtung um 90° versetzt zu den beiden ersten Axialreihen 21 gibt es noch zwei zweite Axialreihen 22 mit ausschließlich zweiten Wendeschneidplatten 11, wobei auch die beiden zweiten Axialreihen 22 zumindest näherungsweise von der ersten Stirnseite 7 zur zweiten Stirnseite 8 verlaufen. Sie beinhalten jedoch keine Schneidplatten unmittelbar angrenzend an die erste oder zweite Stirnseite 7, 8. Vielmehr sind hier die zweiten Wendeschneidplatten 11 in der Achsrichtung 5 derart positioniert, dass sie die Lücken zwischen den ersten und zweiten Wendeschneidplatten 10, 11 der ersten Axialreihen 21 abdecken, um ein einheitliches Zerspanungsbild zu bewirken. Insgesamt ergibt sich damit, dass abseits der ersten Stirnseite 7 in der Achsrichtung 5 verteilt mehrere, hier sogar ausschließlich zweite Wendeschneidplatten 11 auf der Mantelfläche 6 positioniert sind, deren zweiter Achswinkel λ₂ gegenläufig zum ersten Achswinkel λ₁ der untersten, ersten Wendeschneidplatten 10 ist. Abweichend davon kann es aber auch vorteilhaft sein, mit axialem Abstand zur ersten Stirnseite 7 weitere erste Wendeschneidplatten 10 mit einer entsprechenden Orientierung des ersten Achswinkels λ₁ zu positionieren.

Fig. 4 zeigt noch in einer Stirnansicht den Werkzeugkopf 2 nach den Fig. 1 und 2. Hier ist erkennbar, dass auf der ersten Stirnseite 7 optional Stirnschneidplatten 23 angebracht sind. Sie dienen der zerspanenden Nutzung der Stirnseite 7 und sind in ihrer geometrischen Ausgestaltung sowie auswechselbaren und drehbaren Befestigung identisch mit der in Fig. 3 gezeigten ersten Wendeschneidplatte 10. Alle am gezeigten Werkzeugkopf 2 zum Einsatz kommenden Schneidplatten sind damit gleich und können gegen Gleichteile ersetzt werden.

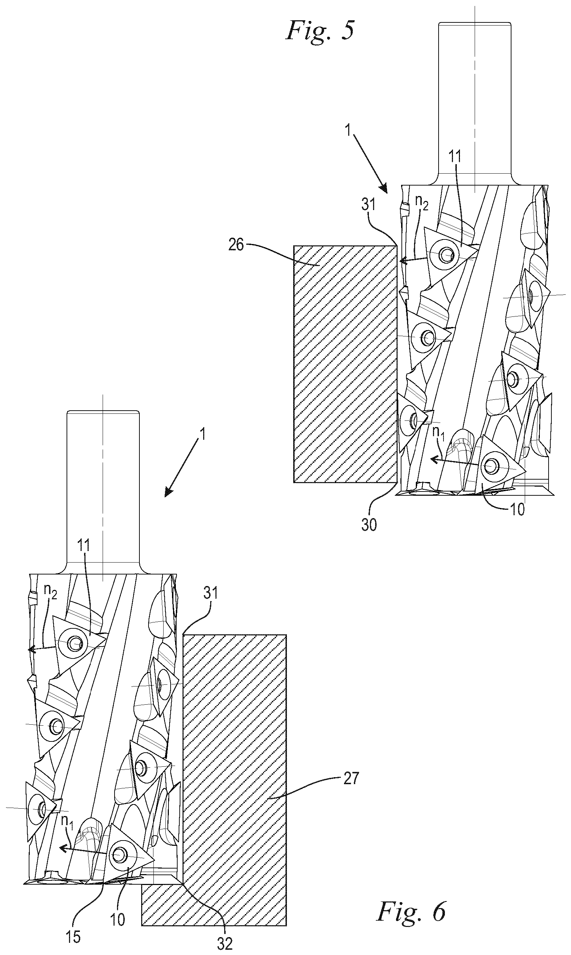

Fig. 5 zeigt in einer Seitenansicht das Bearbeitungswerkzeug 1 nach den Fig. 1 bis 4 beim Vorgang des Fügens. Hierbei wird die Stirnseite eines Werkstücks 26 in voller Höhe durch die Umfangsseite des Werkzeugkopfes 2 bearbeitet, wobei am Werkstück 26 eine untere Außenkante 30 und eine obere Außenkante 31 entsteht. Im Bereich der unteren Außenkante 30 kommen die ersten Wendeschneidplatten 10 zum Einsatz, während im Bereich der oberen Außenkante 31 zweite Wendeschneidplatten 11 wirken. Da die zugehörigen ersten und zweiten Normalrichtungen n₁, n₁ aufeinander zu und damit zur Werkstückmitte hin gerichtet sind, können die Außenkanten 30, 31 nicht ausfransen.

Fig. 6 zeigt das gleiche Bearbeitungswerkzeug 1 beim Vorgang des Fälzens. Das Werkstück 27 wird hier nur über einen Teil seiner Höhe oder Dicke, hier im oberen Teil in Kontakt mit dem Bearbeitungswerkzeug 1 gebracht. Es entsteht ein Falz mit einer oberen Außenkante 31 und einer unteren Innenkante 32. Bei der oberen Außenkante 31 gelten die gleichen Verhältnisse wie bei Fig. 5. Jedoch erlaubt die erfindungsgemäße Ausgestaltung des Bearbeitungswerkzeuges 1 auch die Bearbeitung bzw. Herstellung einer Innenkante 32 mittels der unteren, ersten Wendeschneidplatten 10, deren vorlaufende Schneidenecken 15 die Innenkante 32 des Falzes erzeugen. Die oben beschriebene Orientierung der zugehörigen ersten Normalrichtung n₁ bewirkt zudem, dass kein axialer Druck in die Innenkante 32 hinein entsteht.

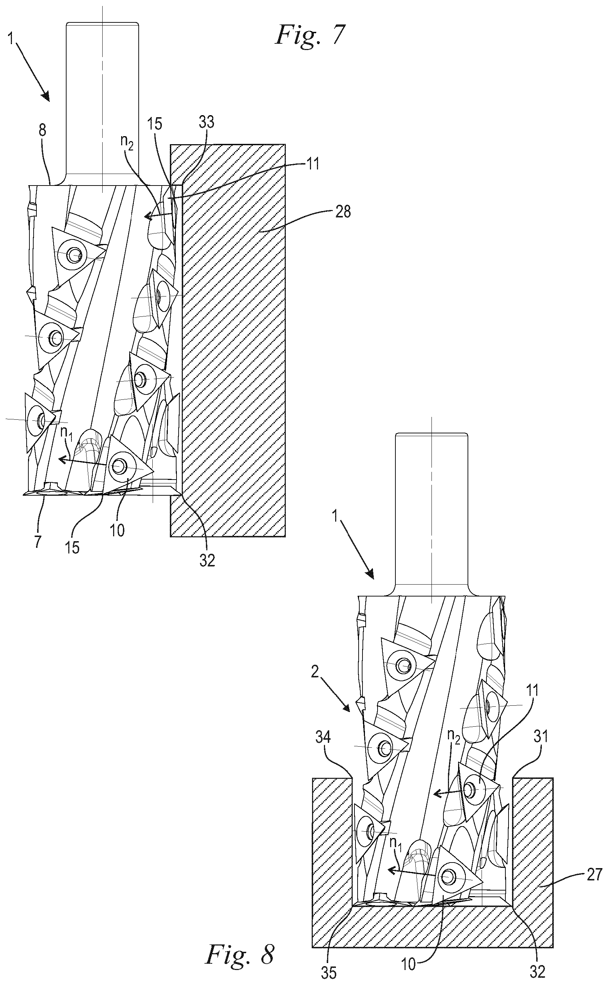

Ein weiterer Anwendungsfall des gleichen Bearbeitungswerkzeuges 1 ist in Fig. 7 gezeigt, wobei in ein Werkstück 28 eine stirnseitige Nut mit einer unteren Innenkante 32 und mit einer oberen Innenkante 33 eingearbeitet wird. Hier kommen neben den übrigen umfangsseitigen Schneidplatten insbesondere diejenigen ersten und zweiten Wendeschneidplatten 10, 11 zum Einsatz, welche unmittelbar angrenzend an die beiden Stirnseiten 7, 8 positioniert sind. Deren vorlaufende Schneidenecken 15 erzeugen die beiden Innenkanten 32, 33. Die oben beschriebene Orientierung der zughörigen ersten und zweiten Normalrichtungen n₁, n₂ bewirkt auch hier, dass kein axialer Druck in die Innenkanten 32, 33 hinein entsteht.

Schließlich ist ein weiterer Anwendungsfall des gleichen Bearbeitungswerkzeuges 1 in Fig. 8 dargestellt. Hier taucht der Werkzeugkopf 2 axial in das Werkstück 27 ein, wobei neben den ersten und zweiten Wendeschneidplatten 10, 11 auch die Stirnschneidplatten 23 (Fig. 4) zum Einsatz kommen. Auf der Oberseite des Werkstücks 27 entsteht eine Nut mit zwei sich gegenüberliegenden Innenkanten 32, 35 sowie oberhalb davon mit zwei sich gegenüberliegenden Außenkanten 31, 34. Für die Innenkanten 32, 35 und die Außenkanten 31, 34 gelten die gleichen Verhältnisse wie beim Fälzen nach Fig. 6. Zusätzlich wird noch deutlich, dass die erste Normalrichtung n₁ der ersten Wendeschneidplatten 10 und damit die auf das Werkstück 27 einwirkende Reaktionskraft vom Nutboden fortweist und damit den Nutboden mechanisch entlastet.

Die vorstehend als Achswinkel λ₁, λ₂ bezeichneten Winkel zwischen den Schneidkanten 15 und der Achsrichtung 5 können auch als Werkzeug-Neigungswinkel benannt werden.

## Patentansprüche

1. Werkzeugkopf eines Bearbeitungswerkzeuges (1) für die zerspanende Bearbeitung von Werkstoffen, insbesondere von Holz oder holzartigen Werkstoffen, vorgesehen zum drehenden Antrieb um eine Drehachse (4) in einer Drehrichtung (24), wobei durch die Drehachse (4) eine Achsrichtung (5) vorgegeben ist, umfassend einen Grundkörper (9) sowie mehrere umfangsseitig des Grundkörpers (9) angeordnete Wendeschneidplatten (10, 11), wobei der Werkzeugkopf (2) eine umfangseitige Mantelfläche (6), eine erste Stirnseite (7) und eine in der Achsrichtung (5) gegenüberliegende zweite Stirnseite (8) aufweist, wobei mindestens eine erste Wendeschneidplatte (10) auf der Mantelfläche (6) angrenzend an die erste Stirnseite (7) positioniert ist, wobei mindestens eine zweite Wendeschneidplatte (11) auf der Mantelfläche (6) mit axialem Abstand zur ersten Stirnseite (7) und zur ersten Wendeschneidplatte (10) angeordnet ist, und wobei die ersten und zweiten Wendeschneidplatten (10, 11) in der Drehrichtung (24) nach vorne weisende, vorlaufende aktive Schneidkanten (12) aufweisen, welche mit zueinander gegenläufigen Achswinkeln (λ₁, λ₂) relativ zur Achsrichtung (5) ausgerichtet sind,
**dadurch gekennzeichnet,**
- **dass** die mindestens eine erste Wendeschneidplatte (10) eine vorlaufende Schneidenecke (15) aufweist, an welcher die vorlaufende Schneidkante (12) sowie eine weitere, bezogen auf die Drehrichtung (24) nach hinten gerichtete passive Schneidkante (13) in einem Eckwinkel (δ) aneinander angrenzen, wobei die mindestens eine erste Wendeschneidplatte (10) derart montiert ist, dass eine erste Normalrichtung (n₁) zur vorlaufenden Schneidkante (12) von der ersten Stirnseite (7) zur gegenüberliegenden zweiten Stirnseite (8) weist,
- **dass** die vorlaufende Schneidenecke (15) auf Höhe der ersten Stirnseite (7) liegt,
- und **dass** der Betrag des Eckwinkels (δ) kleiner als 90° minus dem Betrag des ersten Achswinkels (λ₁) ist.

2. Werkzeugkopf nach Anspruch 1
**dadurch gekennzeichnet, dass** über den Umfang des Werkzeugkopfes (2) verteilt mehrere und insbesondere insgesamt zwei erste Wendeschneidplatten (10) angeordnet sind.

3. Werkzeugkopf nach Anspruch 1 oder 2,
**dadurch gekennzeichnet, dass** abseits der ersten Stirnseite (7) in der Achsrichtung (5) verteilt mehrere und bevorzugt ausschließlich zweite Wendeschneidplatten (11) auf der Mantelfläche (6) positioniert sind, deren zweiter Achswinkel (λ₂) gegenläufig zum ersten Achswinkel (λ₁) der mindestens einen ersten Wendeschneidplatte (10) ist.

4. Werkzeugkopf nach einem der Ansprüche 1 bis 3,
**dadurch gekennzeichnet, dass** mindestens eine zweite Wendeschneidplatte (11) eine vorlaufende Schneidenecke (15) aufweist, an welcher die vorlaufende aktive Schneidkante (12) sowie eine weitere, bezogen auf die Drehrichtung (24) nach hinten gerichtete passive Schneidkante (13) in einem Eckwinkel (δ) aneinander angrenzen, wobei diese zweite Wendeschneidplatte (11) derart montiert ist, dass eine zweite Normalrichtung (n₂) zur vorlaufenden Schneidkante (12) von der zweiten Stirnseite (8) zur gegenüberliegenden ersten Stirnseite (7) weist, dass die vorlaufende Schneidenecke (15) auf Höhe der zweiten Stirnseite (8) liegt, und dass der Betrag des Eckwinkels (δ) kleiner als 90° minus dem Betrag des zweiten Achswinkels (λ₂) ist.

5. Werkzeugkopf nach einem der Ansprüche 1 bis 4,
**dadurch gekennzeichnet, dass** der Achswinkel (λ₁, λ₂) der vorlaufenden Schneidkante (12) einen Betrag aufweist, der in einem Bereich von einschließlich 3° bis einschließlich 28° und insbesondere in einem Bereich von einschließlich 5° bis einschließlich 15° liegt.

6. Werkzeugkopf nach einem der Ansprüche 1 bis 5,
**dadurch gekennzeichnet, dass** der Betrag des Eckwinkels (δ) kleiner als 80° minus dem Betrag des zugeordneten ersten bzw. zweiten Achswinkels (λ₁, λ₂) ist.

7. Werkzeugkopf nach einem der Ansprüche 1 bis 6,
**dadurch gekennzeichnet, dass** die ersten Wendeschneidplatten (10) und bevorzugt auch die zweiten Wendeschneidplatten (11) den Grundriss eines gleichwinkligen Dreiecks aufweisen.

8. Werkzeugkopf nach einem der Ansprüche 1 bis 7,
**dadurch gekennzeichnet, dass** die Wendeschneidplatte (10, 11) eine Schneidenecke (15) umfasst, an welcher die vorlaufende Schneidkante (12) sowie eine weitere Schneidkante (13) in einem Eckwinkel (δ) aneinander angrenzen, wobei der Betrag des Eckwinkels (δ) kleiner als 70° ist.

9. Werkzeugkopf nach Anspruch 8,
**dadurch gekennzeichnet, dass** die Wendeschneidplatte (10, 11) den Grundriss eines gleichwinkligen Dreiecks aufweist.

10. Werkzeugkopf nach Anspruch 8 oder 9,
**dadurch gekennzeichnet, dass** die Schneidkanten (12, 13, 14) mit einer an die Mantelfläche (6) des Werkzeugkopfes (2) angepassten Bombierung (20) versehen sind.

## Claims

1. Tool head of a machining tool (1) for machining materials, in particular wood or wood-like materials, provided for being driven in rotation about an axis of rotation (4) in a direction of rotation (24), wherein an axial direction (5) is specified by the axis of rotation (4), comprising a base body (9) and a plurality of indexable cutting inserts (10, 11) arranged on the periphery of the base body (9), wherein the tool head (2) comprises a peripheral lateral surface (6), a first front face (7), and a second front face (8) that is located opposite in the axial direction (5), wherein at least one first indexable cutting insert (10) is positioned on the lateral surface (6), adjoining the first front face (7), wherein at least one second indexable cutting insert (11) is arranged on the lateral surface (6) at an axial spacing from the first front face (7) and from the first indexable cutting insert (10), and wherein the first and second indexable cutting inserts (10, 11) comprise leading active cutting edges (12) that face forwards in the direction of rotation (24), which edges are oriented with mutually opposing axial angles (λ₁, λ₂) relative to the axial direction (5),
**characterised in that**
- the at least one first indexable cutting insert (10) has a leading cutting corner (15), at which the leading cutting edge (12) and a further passive cutting edge (13), facing towards the rear based on the direction of rotation (24), adjoin one another at a corner angle (δ), wherein the at least one first indexable cutting insert (10) is mounted in such a way that a first normal direction (n₁) relative to the leading cutting edge (12) faces from the first front face (7) towards the opposing second front face (8),
- the leading cutting corner (15) is located at the height of the first front face (7),
- and the magnitude of the corner angle (δ) is less than 90° minus the magnitude of the first axial angle (λ₁).

2. Tool head according to claim 1,
**characterised in that** a plurality of, and in particular a total of two, first indexable cutting inserts (10) are arranged distributed over the periphery of the tool head (2).

3. Tool head according to either claim 1 or claim 2,
**characterised in that** a plurality of and preferably exclusively second indexable cutting inserts (11) are positioned on the lateral surface (6), remotely from the first front face (7) and distributed in the axial direction (5), the second axial angle (λ₂) of which is reversed compared with the first axial angle (λ₁) of the at least one first indexable cutting insert (10).

4. Tool head according to any of claims 1 to 3,
**characterised in that** at least one second indexable cutting insert (11) has a leading cutting corner (15) at which the leading active cutting edge (12) and a further passive cutting edge (13), directed to the rear based on the direction of rotation (24), adjoin one another at a corner angle (δ), wherein said second indexable cutting insert (11) is mounted in such a way that a second normal direction (n₂) relative to the leading cutting edge (12) faces from the second front face (8) to the opposing first front face (7), that the leading cutting corner (15) is located at the height of the second front face (8), and that the magnitude of the corner angle (δ) is less than 90° minus the magnitude of the second axial angle (λ₂).

5. Tool head according to any of claims 1 to 4,
**characterised in that** the axial angle (λ₁, λ₂) of the leading cutting edge (12) is of a magnitude that is in a range of 3° to 28°, inclusive, and in particular a range of 5° to 15°, inclusive.

6. Tool head according to any of claims 1 to 5,
**characterised in that** the magnitude of the corner angle (δ) is less than 80° minus the magnitude of the associated first or second axial angle (λ₁, λ₂).

7. Tool head according to any of claims 1 to 6,
**characterised in that** the first indexable cutting inserts (10) and preferably also the second indexable cutting inserts (11) have the outline of an equiangular triangle.

8. Tool head according to any of claims 1 to 7,
**characterised in that** the indexable cutting insert (10, 11) comprises a cutting corner (15) at which the leading cutting edge (12) and a further cutting edge (13) adjoin one another at a corner angle (δ), wherein the magnitude of the corner angle (δ) is less than 70°.

9. Tool head according to claim 8,
**characterised in that** the indexable cutting insert (10, 11) has the outline of an equiangular triangle.

10. Tool head according to either claim 8 or claim 9,
**characterised in that** the cutting edges (12, 13, 14) are provided with a crowning (20) that is adjusted to the lateral surface (6) of the tool head (2).

## Revendications

1. Tête d'outil d'un outil d'usinage (1) pour l'usinage par enlèvement de copeaux de matériaux, en particulier de bois ou de matériaux similaires au bois, prévue pour être entraînée en rotation autour d'un axe de rotation (4) dans une direction de rotation (24), dans laquelle une direction axiale (5) est spécifiée par l'axe de rotation (4), comprenant un corps de base (9) ainsi que plusieurs plaquettes amovibles (10, 11) disposées côté périphérie du corps de base (9), dans laquelle la tête d'outil (2) présente une surface extérieure périphérique (6), un premier côté frontal (7) et un second côté frontal (8) opposé dans la direction axiale (5), dans laquelle au moins une première plaquette amovible (10) est positionnée de manière à jouxter le premier côté frontal (7) sur la surface extérieure (6), dans laquelle au moins une deuxième plaquette amovible (11) est disposée à une distance axiale par rapport au premier côté frontal (7) et par rapport à la première plaquette amovible (10) sur la surface extérieure (6), et dans laquelle les première et deuxième plaquettes amovibles (10, 11) présentent des bords tranchants actifs (12) antérieurs, pointant vers l'avant dans la direction de rotation (24), lesquels sont orientés selon des angles axiaux (λ₁, λ₂) contraires l'un à l'autre par rapport à la direction axiale (5),
**caractérisée en ce**
- **que** l'au moins une première plaquette amovible (10) présente un coin tranchant (15) antérieur, sur lequel le bord tranchant (12) antérieur ainsi qu'un autre bord tranchant passif (13) dirigé vers l'arrière par rapport à la direction de rotation (24) se jouxtent l'un l'autre selon un angle de coin (δ), dans laquelle l'au moins une première plaquette amovible (10) est montée de telle manière qu'une première direction normale (n₁) par rapport au bord tranchant (12) antérieur pointe depuis le premier côté frontal (7) vers le deuxième côté frontal (8) opposé,
- **que** le coin tranchant (15) antérieur se situe à hauteur du premier côté frontal (7),
- et **que** la valeur de l'angle de coin (δ) est inférieure à 90° moins la valeur du premier angle axial (λ₁).

2. Tête d'outil selon la revendication 1,
**caractérisée en ce que** plusieurs et en particulier au total deux premières plaquettes amovibles (10) sont disposées de manière répartie sur la périphérie de la tête d'outil (2).

3. Tête d'outil selon la revendication 1 ou 2,
**caractérisée en ce que** sont positionnées, sur la surface extérieure (6), de manière répartie dans la direction axiale (5) à l'écart du premier côté frontal (7), plusieurs et de manière préférée exclusivement des deuxièmes plaquettes amovibles (11), dont le deuxième angle axial (λ₂) est contraire au premier angle axial (λ₁) de l'au moins une première plaquette amovible (10).

4. Tête d'outil selon l'une des revendications 1 à 3,
**caractérisée en ce qu'**au moins une deuxième plaquette amovible (11) présente un coin trenchant (15) antérieur, sur lequel le bord tranchant actif (12) antérieur ainsi qu'un autre bord tranchant passif (13) dirigé vers l'arrière par rapport à la direction de rotation (24) se jouxtent l'un l'autre selon un angle de coin (δ), dans laquelle ladite deuxième plaquette amovible (11) est montée de telle manière qu'une deuxième direction normale (n₂) par rapport au premier bord tranchant (12) antérieur pointe depuis le deuxième côté frontal (8) vers le premier côté frontal (7) opposé, que le coin tranchant (15) antérieur se situe à hauteur du deuxième côté frontal (8), et que la valeur de l'angle de coin (δ) est inférieure à 90° moins la valeur du deuxième angle axial (λ₂).

5. Tête d'outil selon l'une quelconque des revendications 1 à 4,
**caractérisée en ce que** l'angle axial (λ₁, λ₂) du corps tranchant (12) antérieur présente une valeur, qui se situe dans une plage de 3° inclus à 28° inclus et en particulier dans une plage de 5° inclus à 15° inclus.

6. Tête d'outil selon l'une quelconque des revendications 1 à 5,
**caractérisée en ce que** la valeur de l'angle de coin (δ) est inférieure à 80° moins la valeur du premier ou deuxième angle axial (λ₁, λ₂) associé.

7. Tête d'outil selon l'une des revendications 1 à 6,
**caractérisée en ce que** les première plaquettes amovibles (10) et de manière préférée également les deuxièmes plaquettes amovibles (11) présentent le contour d'un triangle isocèle.

8. Tête d'outil selon l'une quelconque des revendications 1 à 7,
**caractérisée en ce que** la plaquette amovible (10, 11) comprend un coin tranchant (15), sur lequel le bord tranchant (12) antérieur ainsi qu'un autre bord tranchant (13) se jouxtent l'un l'autre selon un angle de coin (δ), dans laquelle la valeur de l'angle de coin (δ) est inférieure à 70°.

9. Tête d'outil selon la revendication 8,
**caractérisée en ce que** la plaquette amovible (10, 11) présente le contour d'un triangle isocèle.

10. Tête d'outil selon la revendication 8 ou 9,
**caractérisée en ce que** les bords tranchants (12, 13, 14) sont pourvus d'une partie bombée (20) adaptée à la surface extérieure (6) de la tête d'outil (2).
